# FASCICULE DE BREVET EUROPEEN

(11) **EP 4 223 620 B1**
(45) Date de publication et mention de la délivrance du brevet: **19.11.2025**
(21) Numéro de dépôt: 23155256.3
(22) Date de dépôt: 07.02.2023
(51) Int. Cl.: B62D 35/00, B62D 35/02, B62D 37/02

(54) **ÉLÉMENT DE CARROSSERIE À DÉFORMATION PILOTÉE DE VÉHICULE AUTOMOBILE**
KRAFTFAHRZEUG-KAROSSERIEELEMENT MIT GESTEUERTER VERFORMUNG
AUTOMOBILE BODY ELEMENT WITH CONTROLLED DEFORMATION

(30) Priorité: 08.02.2022 FR 2201115
(43) Date de publication de la demande: 09.08.2023
(73) Titulaire: OPmobility SE, 69007 Lyon (FR)
(72) Inventeur: EULALIE, Yoann, 01150 SAINTE-JULIE (FR); GILOTTE, Philippe, 01150 SAINTE-JULIE (FR); GRANDO, Jérôme, 01150 SAINTE-JULIE (FR); BICO, José, 75005 PARIS (FR); REYSSAT, Etienne, 75005 PARIS (FR); ROMAN, Benoît, 75005 PARIS (FR)
(74) Mandataire: LLR

(56) Documents cités:
- FR-A1- 3 064 585
- US-A- 4 030 779
- US-A1- 2010 231 000

## Description

L'invention concerne les éléments de carrosserie à déformation pilotée de véhicules automobiles, par exemple les dispositifs déflecteurs montés sur les véhicules automobiles.

Parmi les déflecteurs présents sur un véhicule automobile, on peut par exemple citer un déflecteur mobile qui peut être monté à l'avant du véhicule sous le bouclier avant. En tout état de cause, et en dehors du positionnement sur le véhicule, de tels déflecteurs ont pour objectif de réduire la trainée du véhicule et par conséquent sa consommation en carburant, notamment à vitesse élevée, en déviant un flux d'air opposé à l'avancée du véhicule.

À faible vitesse, le déflecteur d'air, qui est généralement une lame rigide pouvant avoir une forme aérodynamique, ainsi qu'une hauteur, différentes en fonction des véhicules équipés, est en position rabattue sous le bouclier avant, afin de le protéger des chocs éventuels contre des obstacles, par exemple des bordures de trottoir. Cette position convient donc pour la circulation en ville à faible vitesse ou sur des routes comprenant des creux et des bosses.

Lorsque la vitesse du véhicule atteint une valeur seuil, la lame est déployée, généralement par un mouvement de rotation, afin de venir s'opposer au flux d'air et ainsi réduire la trainée du véhicule. Le gain en termes de trainée peut par exemple être de l'ordre de 5% à une vitesse de 130 km/h. Alternativement, ce déploiement peut être effectué par une translation dans un plan vertical, comme exposé dans le brevet US 8 702 152.

Cependant, un tel dispositif présente des inconvénients.

Premièrement, un déploiement à une vitesse relativement élevée nécessite l'utilisation de dispositifs d'actionnement et de maintien en position déployée. De tels dispositifs nécessitent une puissance élevée, et ils sont par conséquent gourmands en énergie. En effet, le déflecteur mobile se déploie par rotation en s'opposant de plus en plus à un flux d'air exerçant une forte pression. Une fois en position déployée, la pression s'exerçant sur le déflecteur est très importante. En effet, la distribution de pression est telle que la face avant est en surpression de l'ordre de la pression dynamique, et la face arrière est en dépression de l'ordre de 30%-40% par rapport à la face avant. Ces deux effets se cumulent pour former un effort longitudinal de rabattement conséquent. Par exemple, la pression exercée sur le déflecteur peut être de 200N à 130 km/h.

De plus, le déflecteur mobile peut rencontrer des obstacles, et ce même quand le véhicule circule à une vitesse élevée. Le déflecteur, réalisé en matériau rigide, et aussi le système complet, c'est-à-dire l'actionneur et l'embrayage, peuvent alors subir des dommages. Pour éviter cela, il est alors nécessaire de prévoir un dispositif de rétraction rapide et/ou de débrayage du déflecteur.

La demande FR 3 064 585 A1 décrit un déflecteur mobile de véhicule automobile comprenant une paroi déformable. Cependant, il est aussi nécessaire de prévoir un dispositif d'actionnement pour déployer par déformation cette paroi, disposé derrière cette dernière. Il peut s'agir de vessies gonflables, d'un système comprenant des vérins ou encore d'arceaux mobiles. De tels dispositifs nécessitent la mise en place d'un organe de déformation ainsi que d'un système de contrôle et d'actionnement de cet organe de déformation, ce qui rend l'ensemble complexe, relativement lourd ou encore volumineux.

De manière plus générale, et pour tout élément de carrosserie déformable de manière pilotée, qu'il s'agisse d'améliorer l'aérodynamisme du véhicule (comme décrit ci-dessus), de modifier localement la forme du véhicule dans un but esthétique ou encore d'augmenter la résistance aux chocs de faible amplitude (par exemple pour protéger une portière des chocs), l'utilisation d'une paroi déformable nécessite un organe de déformation tel que décrit plus haut. Un exemple d'application est décrit dans la demande FR 3 075 721 A1 divulguant des moyens de protection d'un panneau de carrosserie comprenant une peau déformable élastiquement. Les documents EP 2 172 369 A1 ou encore FR 3 039 805 A1 divulguent quant à eux des dispositifs de protection d'une pièce de carrosserie comprenant une partie mobile entre une position de repos et une position de protection, le document FR 3 039 805 A1 divulguant l'utilisation d'une paroi déformable élastiquement.

Le document US 4 030 779 A décrit un élément de carrosserie à déformation pilotée selon le préambule de la revendication 1.

L'invention a notamment pour but de fournir un élément de carrosserie à déformation pilotée pouvant être facilement déployé et maintenu en position tout en état le plus compact et simple d'un point de vue structurel.

À cet effet, l'invention a pour objet un élément de carrosserie à déformation pilotée de véhicule automobile comprenant un corps principal déformable élastiquement, le corps principal comprenant un réseau de canaux, chaque canal étant configuré pour être mis en pression par un flux d'air comprimé afin de faire passer l'élément de carrosserie à déformation pilotée d'une position de repos à une position déployée, au moins un organe de rigidification de l'élément de carrosserie à déformation pilotée d'air s'étendant à l'intérieur d'au moins une partie des canaux.

Ainsi, on obtient un élément de carrosserie intégrant dans la structure d'un corps déformable élastiquement des moyens de déformation de ce dernier. En effet, une mise en pressions des canaux, qui sont donc des canaux à section fermée, permet de déformer le corps principal afin de le faire passer d'une position de repos à une position déployée dans laquelle il permet, quand l'élément de carrosserie est un dispositif déflecteur d'air, de dévier un flux d'air s'opposant au véhicule en mouvement, ou de protéger une pièce de carrosserie quand l'élément de carrosserie est un dispositif de protection. Il n'est donc plus nécessaire de prévoir une structure indépendante du corps principal et déformant ce dernier quand cela est nécessaire.

L'organe de rigidification permet quant à lui d'augmenter la résistance de l'élément de carrosserie en position déployée. En effet, quand l'élément de carrosserie est un dispositif déflecteur d'air, ce dernier permet au corps principal en position déployée de résister à des efforts tangentiels exercés sur les flancs du déflecteur déployé par la pression d'air aérodynamique générée par le déplacement vers l'avant du véhicule afin de s'assurer d'une bonne déviation du flux d'air et non une déformation du corps principal au contact de ce flux d'air. Quand l'élément de carrosserie est un dispositif de protection d'un panneau de carrosserie, ce dernier résiste à des chocs de plus forte intensité que les dispositifs de protection selon l'art antérieur. De manière plus générale, et en fonction du type d'élément de carrosserie déformable, la présence de l'organe de rigidification peut augmenter la résistance de l'élément de carrosserie en position déployée, par exemple à un choc de faible amplitude.

Suivant d'autres caractéristiques optionnelles de l'élément de carrosserie à déformation pilotée prises seules ou en combinaison :
- le réseau de canaux est configuré pour permettre une déformation du corps principal dans une première direction et une déformation plus restreinte dans des directions perpendiculaires à la première direction. Cela permet de maîtriser la forme l'élément de carrosserie à déformation pilotée qui ne se déploie que dans la direction souhaitée ;
- le corps principal est réalisé à base d'un élastomère, notamment de polyuréthane thermoplastique, de silicone, de latex naturel et leurs mélanges ou d'un mélange de styrène éthylène-butylène styrène et de polypropylène ;
- le réseau de canaux est un réseau continu, le corps principal comprenant au moins un orifice d'injection d'air à l'intérieur du réseau de canaux. On obtient dès lors une architecture relativement simple à mettre sous pression du réseau de canaux ;
- le corps principal comprend des canaux principaux et des canaux secondaires reliant les canaux principaux entre eux, l'organe de rigidification s'étendant à l'intérieur d'au moins une partie des canaux principaux et/ou secondaires ;
- des parties secondaires de l'organe de rigidification s'étendant dans des canaux secondaires sont configurés pour se déformer lorsque l'élément de carrosserie à déformation pilotée passe de sa position de repos à sa position déployée ;
- l'organe de rigidification est réalisé dans un matériau présentant un module élastique supérieur à celui du corps principal, de préférence réalisé dans un matériau choisi parmi l'acier, l'aluminium, le polypropylène chargé de fibres de verre ou de talc, du polyamide chargé de fibres de verre ;
- le corps principal a une épaisseur comprise entre 1 millimètre et 20 millimètres, de préférence inférieure à 10 millimètres, et encore de préférence sensiblement égale à 5 millimètres ;
- un jeu est ménagé entre l'organe de rigidification et au moins une partie de la paroi du canal le contenant lorsque l'élément de carrosserie est en position de repos. Cela permet de s'assurer d'un bon passage de l'air sous pression permettant le passage de l'élément de carrosserie à déformation pilotée de la position de repos à la position déployée ;
- l'organe de rigidification comprend au moins une dépression configurée pour permettre le passage d'air entre l'organe de rigidification et une paroi interne d'au moins un canal ; et
- le corps principal comprend plusieurs réseaux de canaux configurés pour être pilotés de façon indépendante les uns des autres, c'est-à-dire pour être mis en pression par flux d'air comprimé de façon indépendante les uns des autres ;
- l'élément de carrosserie à déformation pilotée est un dispositif déflecteur d'air.

L'invention a également pour objet un procédé de fabrication d'un élément de carrosserie à déformation pilotée selon l'invention, comprenant les étapes suivantes :
- fabrication de l'organe de rigidification,
- placement de l'organe de rigidification dans un moule, et
- surmoulage du corps principal autour de l'organe de rigidification.

Un tel procédé permet de fabriquer de manière relativement rapide un élément de carrosserie à déformation pilotée selon l'invention.

Suivant d'autres caractéristiques optionnelles du procédé de fabrication prises seules ou en combinaison :
- l'organe de rigidification est moulé. Cela permet de concevoir l'ensemble des éléments formant l'élément de carrosserie à déformation pilotée par moulage ;
- le corps principal est moulé à l'aide d'une matière n'adhérant pas à l'organe de rigidification. Cela permet de s'assurer d'un passage optimal de l'air sous pression dans les canaux le long de la structure de rigidification lors du passage de l'élément de carrosserie à déformation pilotée de la position rétractée à la position déployée ; et
- le surmoulage du corps principal autour de l'organe de rigidification est suivi d'une première mise en pression avant utilisation de l'élément de carrosserie à déformation pilotée. Cela permet de s'assurer du fonctionnement optimal en fin du procédé de fabrication et quelle que soit la forme de la structure de rigidification ou les matériaux utilisés pour le moulage du corps principal.

L'invention a également pour objet un procédé de fabrication d'un élément de carrosserie à déformation pilotée selon l'invention, comprenant les étapes suivantes :
- fabrication de l'organe de rigidification,
- moulage d'une première partie du corps principal comprenant le réseau de canaux, les canaux étant débouchants,
- mise en place de l'organe de rigidification à l'intérieur des canaux de la première partie du corps principal restée dans le moule, et
- fermeture par moulage des canaux à l'aide d'une seconde partie du corps principal.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue de côté d'un élément de carrosserie à déformation pilotée, ici un dispositif déflecteur d'air selon l'invention en configuration déployée,
[Fig. 2] la figure 2 est une vue de face d'un élément de carrosserie à déformation pilotée, ici un déflecteur d'air, selon l'invention ;
[Fig. 3] la figure 3 est une vue en coupe selon le plan de coupe A-A d'une partie d'un élément de carrosserie à déformation pilotée selon un premier mode de réalisation de l'invention, l'élément de carrosserie à déformation pilotée étant en position de repos,
[Fig. 4] la figure 4 est une vue en coupe selon un plan de coupe A-A d'une partie d'un élément de carrosserie à déformation pilotée selon le premier mode de réalisation de l'invention, l'élément de carrosserie à déformation pilotée étant en début de déploiement,
[Fig. 5] la figure 5 est une vue en coupe selon un plan de coupe A-A d'une partie d'un élément de carrosserie à déformation pilotée selon un second mode de réalisation de l'invention, le l'élément de carrosserie à déformation pilotée étant en position de repos,
[Fig. 6] la figure 6 est une vue en coupe selon un plan de coupe A-A d'une partie d'un élément de carrosserie à déformation pilotée selon le second mode de réalisation de l'invention, l'élément de carrosserie à déformation pilotée étant en début de déploiement,
[Fig. 7] la figure 7 est une vue en coupe selon un plan de coupe A-A d'une partie d'un élément de carrosserie à déformation pilotée selon un troisième mode de réalisation de l'invention, l'élément de carrosserie à déformation pilotée étant en position de repos,
[Fig. 8] la figure 8 est une vue en coupe selon un plan de coupe A-A d'une partie d'un élément de carrosserie à déformation pilotée selon le troisième mode de réalisation de l'invention, l'élément de carrosserie à déformation pilotée étant en début de déploiement,
[Fig. 9] la figure 9 est une vue du dessus d'un dispositif déflecteur d'air selon l'invention,
[Fig. 10] la figure 10 est une vue du dessus du dispositif de rigidification selon une première variante de réalisation de l'invention,
[Fig. 11] la figure 11 est une vue du dessus du dispositif de rigidification selon une seconde variante de réalisation de l'invention,
[Fig. 12] la figure 12 est une vue en coupe d'un organe de rigidification mis en place dans une partie d'un corps principal, le dispositif de rigidification ayant une première forme,
[Fig. 13] la figure 13 est une vue en coupe d'un organe de rigidification mis en place dans une partie d'un corps principal, le dispositif de rigidification ayant une seconde forme,
[Fig. 14] la figure 14 est une vue en coupe du corps principal du dispositif déflecteur d'air selon l'invention après surmoulage d'une seconde partie du corps principal.

### Description détaillée

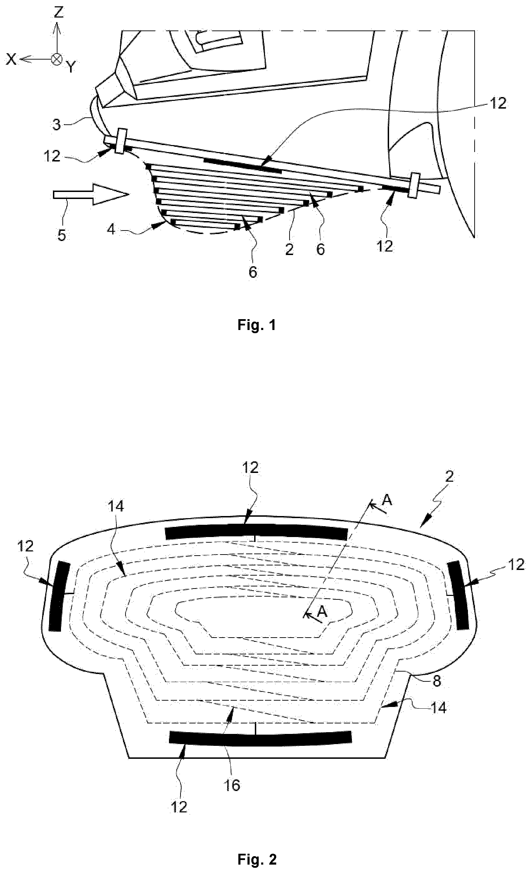

La figure 1 illustre un exemple d'élément de carrosserie à déformation pilotée. La description ci-dessous portera sur un dispositif déflecteur d'air 2, dans le cas présent un déflecteur mobile qui peut être monté à l'avant du véhicule sous le bouclier avant. Comme expliqué auparavant, ce déflecteur d'air peut également être placé dans une zone différente du véhicule. Il pourrait par exemple s'agir d'un dispositif placé sur une portière ou au niveau d'un hayon.

De manière plus large, la description s'applique à des éléments de carrosserie à déformation pilotée autre que des dispositifs déflecteurs d'air, par exemple un dispositif de protection d'une portière comprenant un corps déformable de manière pilotée. Les enseignements techniques décrits ci-dessous et s'appliquant à un dispositif déflecteur d'air 2 peuvent également s'appliquer à tout autre élément de carrosserie à déformation pilotée. En d'autres termes, la description détaillée ci-après ne fait que décrire, de manière non limitante, un exemple d'élément de carrosserie à déformation pilotée (i.e. un déflecteur d'air 2).

La direction de déploiement et de rétraction du dispositif déflecteur d'air 2, qui sera abordée par la suite, est dépendante du positionnement de ce dernier sur un véhicule. Par exemple, et dans le cas d'un dispositif déflecteur d'air 2 monté à l'avant du véhicule sous le bouclier avant 3, cette direction correspond à la direction verticale Z, vers le bas, du véhicule (selon les directions conventionnelles de véhicule automobile : direction longitudinale X, direction transversale Y et direction verticale Z, voir le repère présent sur la figure 1).

La figure 1 illustre un dispositif déflecteur d'air 2 en position déployée. Dans cette position, sa forme déployée dévie le flux d'air relatif allant dans une direction opposée à l'avancée du véhicule, ici matérialisé par la flèche 5. Cette déviation du flux d'air permet d'améliorer l'aérodynamique du véhicule. Le dispositif déflecteur d'air 2 peut être déployé lorsque le véhicule atteint une certaine vitesse afin de remplir sa fonction.

Le déploiement selon une direction donnée, ici la direction Z, correspond à la déformation principale. Il s'agit de la plus grande déformation du dispositif déflecteur d'air. Une déformation selon d'autres directions, par exemple selon les directions longitudinale X et transversale Y, est possible mais moins importante.

De plus, l'amplitude de déploiement peut varier. Il est par exemple possible que l'amplitude maximale de déploiement soit supérieure à 10 fois l'épaisseur d'un corps principal 4 du dispositif déflecteur d'air 2. Il est possible, notamment en fonction de la vitesse du véhicule, de la force ou de la direction du vent, ou encore de l'état de la chaussée, de prévoir un déploiement d'une amplitude plus ou moins importante. Cette variation d'amplitude de déploiement peut être réalisée en adaptant le mécanisme de déploiement décrit plus bas. Ce déploiement plus ou moins important peut également être adapté en fonction de la souplesse du matériau formant le corps principal 4.

Le dispositif déflecteur d'air 2 peut être déployé transversalement à la direction du flux d'air autour du dispositif déflecteur d'air 2, ce qui peut permettre d'éviter l'opposition croissante au flux d'air lors d'un déploiement par rotation. En effet, et en fonction du sens de rotation d'un dispositif déflecteur d'air mobile placé en face avant du véhicule et sous le bouclier avant, ce dernier peut s'opposer à un flux d'air lors de son déploiement ou de sa rétraction par rotation, et ce lorsque le véhicule se déplace à une vitesse potentiellement importante. On peut par exemple citer un dispositif déflecteur d'air mobile se déployant face à un flux d'air lorsque le véhicule se déplace à une vitesse supérieure à 70 km/h.

En position déployée, une première face du dispositif déflecteur d'air 2 (celle s'opposant par exemple à un flux d'air) forme un angle compris entre 30° et 90°, de préférence compris entre 50° et 80°, avec un plan comprenant l'axe longitudinal X et l'axe transversal Y du véhicule. Cet angle permet de dévier l'air arrivant au niveau de la première face du dispositif déflecteur d'air 2. Une deuxième face forme un angle compris entre 0° et 90°, de préférence compris entre 0° et 45°, encore de préférence compris entre 10° et 30°, avec le plan décrit ci-dessus. Cet angle est suffisant pour maintenir le flux d'air au contact du dispositif déflecteur d'air 2 lors du passage du flux d'air de la première face à la deuxième face et au contact du véhicule à l'arrière du dispositif déflecteur d'air 2.

Le dispositif déflecteur d'air 2 comprend un corps principal 4 déformable élastiquement (selon la plus grande déformation décrite plus haut) et comprend un réseau de canaux 6 (seulement certains canaux 6 sont référencés sur les figures), chaque canal 6 étant configuré pour être mis en pression par un flux d'air comprimé afin de faire passer le dispositif déflecteur d'air 2 d'une position de repos, ou position rétractée, (par exemple sensiblement plane) à une position déployée. On comprend donc que les canaux 6 ont une section fermée pour pouvoir être mis sous pression.

Ce corps principal 4 peut être réalisé à base d'un élastomère, notamment de polyuréthane thermoplastique, de silicone, de latex naturel et leurs mélanges, ou d'un mélange de styrène éthylène-butylène styrène et de polypropylène. De manière plus générale, le matériau formant le corps principal a un module élastique inférieur à celui d'un organe de rigidification 8. Par exemple, le corps principal 4 est réalisé par exemple en un élastomère présentant un module élastique, mesuré à 23°C selon la norme NFT 46-002, compris entre 10 kPa et 200 MPa. On peut également choisir un matériau ayant une dureté comprise entre 20 et 80 Shore A, de préférence sensiblement égale à 50 Shore A.

Le réseau de canaux 6 est configuré pour permettre une déformation du corps principal 4 dans une première direction, quasi sans déformation dans des plans perpendiculaires à la première direction. Dans le cas d'un dispositif déflecteur d'air 2 monté à l'avant du véhicule sous le bouclier avant 3, le corps principal 4 se déploie dans la direction verticale Z avec des déploiements restreints dans les directions longitudinale X et transversale Y.

La déformation du corps principal 4 est réalisée grâce à la présence d'au moins un orifice d'injection d'air dans le réseau de canaux 6. Le nombre d'orifices d'injection d'air peut varier. De l'air comprimé peut être injecté dans le réseau de canaux 6 par le ou les orifices d'injection d'air. Par exemple, le réseau de canaux 6 peut être un réseau continu, le corps principal 4 comprenant au moins un orifice d'injection d'air à l'intérieur du réseau de canaux. Alternativement, le réseau de canaux 6 peut être formé de plusieurs portions indépendantes les unes des autres, chaque portion comprenant au moins un orifice d'injection d'air.

L'injection d'air comprimé permet donc une déformation du corps principal 4, au moins une partie des canaux 6 formant des paliers de déformation (ou courbes de niveau) plus ou moins élevés en suivant la direction de déploiement du dispositif déflecteur d'air 2. L'amplitude de déformation et la direction de déformation du corps principal 4 est notamment fonction de la densité des canaux 6 et de leur orientation, souplesse du matériau formant le corps principal 4, ainsi que de la pression de l'air comprimé injecté.

La métrique macroscopique du corps principal 4 en position déployée est différente de la métrique macroscopique de ce même corps principal 4 en position de repos. Par « métrique macroscopique du corps principal 4 », on entend l'ensemble des distances séparant deux points différents de la surface médiane définie au sein du corps principal 4 entre sa surface supérieure et sa surface inférieure. Ainsi, au moins certaines distances entre des points différents de la surface médiane ont varié lors du passage de la configuration de repos à la configuration déployée.

De plus, et dans la position déployée, le rayon de courbure d'une surface extérieure du corps principal 4, pris en regard de chaque canal 6 adjacent à la surface extérieure, est supérieur à deux fois la taille du canal 6 adjacent à la surface extérieure. Ainsi, les canaux 6 permettent de produire l'étirement du corps principal 4.

Le corps principal 4 a de préférence une épaisseur comprise entre 1 millimètre et 20 millimètres, de préférence inférieure à 10 millimètres, et encore de préférence sensiblement égale à 5 millimètres. On entend par épaisseur la plus petite dimension du corps principal 4 s'étendant dans la direction de déploiement du corps principal 4.

Le corps principal 4, et notamment sa forme, ses propriétés, les matériaux le formant, le réseau de canaux 6 (y compris leur taille au sein du corps principal 4) ou encore son fonctionnement sont décrits dans la demande FR 3 084 010 A1. On parle dès lors de matériau baromorphe (i.e. prenant une forme différente en fonction de la pression de l'air dans les canaux 6).

Le dispositif déflecteur d'air 2 comprend en outre un organe de rigidification 8 du dispositif déflecteur d'air 2 s'étendant à l'intérieur d'au moins une partie des canaux 6.

Comme expliqué auparavant, l'organe de rigidification 8 permet quant à lui d'augmenter la résistance du dispositif déflecteur d'air 2 en position déployée. En effet, ce dernier permet au corps principal 4 en position déployée de résister à des efforts tangentiels exercés par un flux d'air s'opposant à l'avancée du véhicule afin de s'assurer d'une bonne déviation du flux d'air et non une déformation du corps principal au contact de ce flux d'air. La présence d'un organe de rigidification 8 dans les canaux réduit le volume d'air à l'intérieur de ces canaux. Cela permet une mise sous pression plus rapide par rapport à des canaux dépourvus de cette structure et/ou cela permet d'utiliser un compresseur moins puissant.

Comme expliqué plus haut, l'organe de rigidification 8 peut être réalisé dans un matériau ayant un module élastique supérieur à celui du matériau formant le corps principal 4. Il peut par exemple être réalisé dans un matériau choisi parmi l'acier, l'aluminium, le polypropylène chargé de fibres de verre ou de talc, du polyamide chargé de fibres de verre. Le choix du matériau formant l'organe de rigidification 8 ainsi que ses dimensions, notamment son épaisseur, sont régis par les performances de résistance attendues du dispositif déflecteur d'air 2 aux efforts tangentiels exercés par un flux d'air s'opposant à l'avancée d'un véhicule équipé du dispositif déflecteur d'air 2.

Les figures de la présente demande illustrent un cas de figure dans lequel tous les canaux 6 comprennent un organe de rigidification 8. Ce cas de figure sera décrit par la suite. Alternativement, seule une partie des canaux 6 peut comprendre un organe de rigidification 8. Il est également possible que le dispositif déflecteur d'air 2 comprenne plusieurs organes de rigidification 8 s'étendant dans des portions différentes de ce dernier.

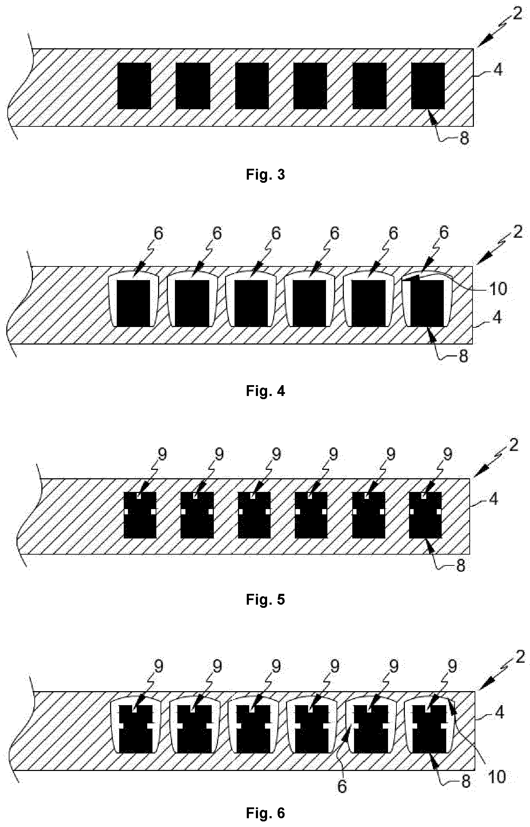

Lorsque de l'air comprimé est injecté dans le réseau de canaux 6, cela conduit à une dilatation des canaux 6 comme cela est visible sur les figures 4, 6 et 8. L'air comprimé passe autour de l'organe de rigidification 8 pour permettre le déploiement du dispositif déflecteur d'air 2.

A l'état de repos, l'espace occupé par l'organe de rigidification 8 dans les canaux 6 peut varier. Dans les exemples illustrés, les canaux 6 ont une section transversale rectangulaire lorsque le dispositif déflecteur d'air 2 est en position rétractée, tout comme les portions de l'organe de rigidification 8 (cette forme varie légèrement pour le second mode de réalisation illustré aux figures 5 et 6 et décrit par la suite). Ces formes peuvent bien évidemment varier, par exemple en formant un polygone différent d'un rectangle, ou encore en étant de section circulaire ou elliptique.

Selon un premier mode de réalisation de l'invention illustré à la figure 3, l'organe de rigidification 8 occupe l'intégralité du volume des canaux 6. Le passage forcé d'air comprimé va conduire à un écartement d'au moins une partie des parois internes 10 (seule une paroi interne est référencée par figure) de l'organe de rigidification 8 afin de permettre le déploiement du dispositif déflecteur d'air 2.

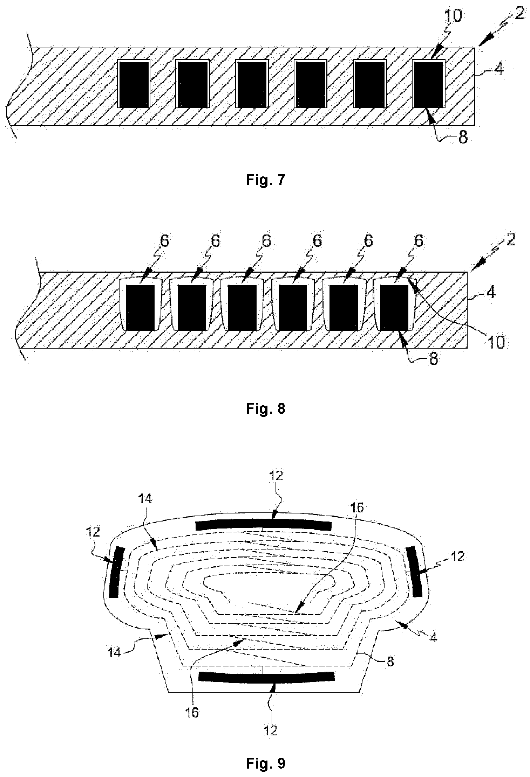

Selon un second mode de réalisation illustré aux figures 5 et 6 et un troisième mode de réalisation illustré aux figures 7 et 8, au moins un jeu peut être ménagé entre l'organe de rigidification 8 et au moins une paroi interne 10 d'au moins un canal lorsque le dispositif déflecteur 2 est en position rétractée, de préférence de façon continue le long des canaux 6. Cela permet de s'assurer d'un passage optimal d'air comprimé lors que déploiement du dispositif déflecteur d'air 2. Comme cela sera vu par la suite, de telles configurations peuvent être liées au mode de fabrication du dispositif déflecteur d'air 2.

Selon le second mode de réalisation de l'invention, l'organe de rigidification comprend, sur trois de ses faces (ce nombre peut varier, notamment en fonction de la forme de l'organe de rigidification 8 ou encore des contraintes liées à la fabrication de ce dernier), au moins une dépression 9 permettant le passage de l'air comprimé injecté dans le réseau de canaux 6 (seule une partie des dépressions 9 est référencée sur les figures). Le passage d'air comprimé va accentuer la taille du jeu ménagé entre les parois internes 10 des canaux 6 comme cela est visible sur la figure 6.

Selon le troisième mode de réalisation de l'invention, l'organe de rigidification 8 ne comprend pas de dépression 9 mais, de manière plus générale, un jeu est ménagé de manière continue entre trois faces internes des canaux 6 (ce nombre peut varier, notamment en fonction de la forme de l'organe de rigidification 8 et de la forme de la section des canaux 6) et ce même lorsque le dispositif déflecteur d'air 2 est à l'état rétracté. L'injection d'air sous pression accentue là aussi ce jeu comme cela est visible sur la figure 8.

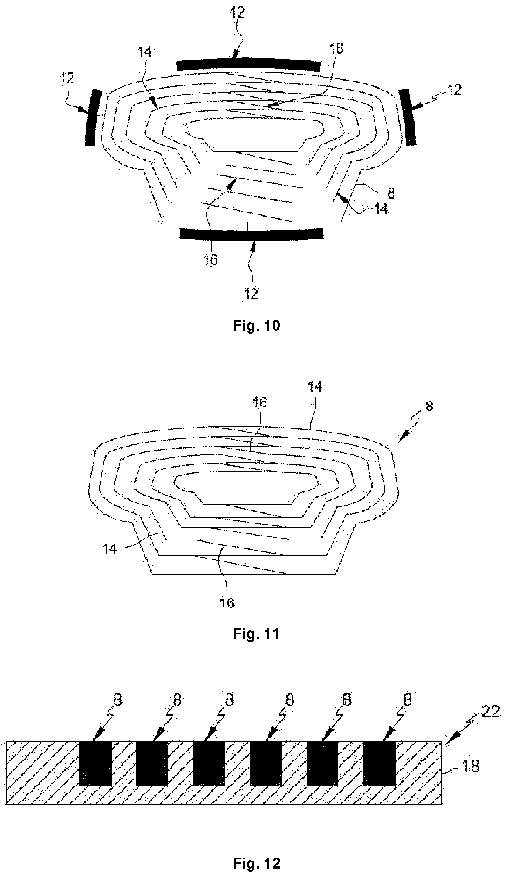

La figure 9 illustre un dispositif déflecteur d'air 2 complet (i.e. comprenant le corps principal 4 et l'organe de rigidification 8), les figures 10 et 11 illustrant quant à elles un organe de rigidification avec ou sans interface de fixation.

Le dispositif déflecteur d'air 2 peut donc être fixé sur un véhicule par l'intermédiaire d'au moins une interface de fixation 12 (quatre représentées sur les figures 9 et 10 formant une armature de fixation). Cette interface de fixation 12 permet un renforcement statique de la fixation en bordure du corps principal 4. Ces interfaces de fixation 12 peuvent par exemple comprendre un ou plusieurs orifices traversants taraudés afin de pouvoir visser le dispositif déflecteur d'air 2 sur un véhicule. D'autres modes de fixation conventionnels peuvent être mis en oeuvre. Ces interfaces de fixation 12 peuvent être reliées ou non à l'organe de rigidification 8.

Le corps principal 4 peut comprendre des canaux principaux, qui sont les canaux permettant la déformation de ce dernier décrite ci-dessus (i.e. déformation de type baromorphe), et des canaux secondaires, ou inter-canaux, reliant les canaux principaux entre eux, et permettant par exemple le passage d'air comprimé d'un canal principal à un autre (i.e. reliant entre eux les canaux principaux d'un même réseau de canaux 6).

L'organe de rigidification 8 peut s'étendre à l'intérieur d'au moins une partie des canaux principaux et/ou secondaires. Dans l'exemple illustré sur la figure 9, l'organe de rigidification 8 est réalisé en une seule pièce s'étendant dans tous les canaux principaux et secondaires du corps principal 4. Il serait possible de faire varier l'implantation du ou des organes de rigidification 8 dans les canaux, par exemple en utilisant plusieurs organes de rigidification 8 s'étendant dans les canaux principaux sans avoir d'organe de rigidification 8 dans les canaux secondaires.

Les canaux principaux se dilatent lors de l'injection d'air comprimé comme illustré sur les figures 4, 6 et 8. Cependant, et en dehors de cette dilatation, ils ne se déforment pas. Les parties principales 14 (seulement une partie référencée sur les figures 9 à 11) de l'organe de rigidification 8 ne se déforment donc pas. Les canaux secondaires peuvent quant à eux s'étirer lors du déploiement du dispositif déflecteur d'air 2. Dès lors, les parties secondaires 16 (seulement une partie référencée sur les figures 9 à 11) de l'organe de rigidification 8 peuvent se déformer avec les canaux secondaires. Elles peuvent par exemple adopter une forme repliée comprenant plusieurs segments s'étendant dans des canaux secondaires comprenant eux-mêmes une forme repliée à plusieurs segments, les canaux secondaires et les parties secondaires 16 de l'organe de rigidification 8 se dépliant lors du déploiement du dispositif déflecteur d'air 2.

La section des canaux secondaires peut être réduite lors du déploiement du dispositif déflecteur d'air 2 du fait d'un possible étirement lors du déploiement du dispositif déflecteur d'air 2. On peut dès lors dimensionner les parties secondaires 16 de l'organe de rigidification 8 afin que ces dernières ne perturbent pas le passage d'air comprimé dans un pareil cas, ou on peut envisager de laisser les canaux secondaires dépourvus d'organe de rigidification 8.

Selon un mode de réalisation, l'élément de carrosserie à déformation pilotée 2 comprend un corps principal 4 muni de plusieurs (au moins deux) réseaux de canaux 6 indépendants les uns des autres, c'est-à-dire que les réseaux sont configurés pour être mis en pression par flux d'air comprimé de façon indépendante les uns des autres. Ainsi, chaque réseau de canaux 6 peut être piloté de façon individuelle, de façon séparée.

Par exemple, il est possible de mettre en pression les canaux d'un premier réseau par un premier flux d'air comprimé, déformant ainsi une première partie du corps principal 4. Puis, indépendamment, mais possiblement en même temps, il est possible de mettre en pression les canaux d'un second réseau par un second flux d'air comprimé, déformant ainsi une seconde partie du corps principal 4.

Ainsi différentes variantes de formes de l'élément de carrosserie 2 peuvent être obtenues en activant alternativement un ou plusieurs réseaux de canaux indépendants (pneumatiquement) entre eux.

Concernant les procédés de fabrication du dispositif déflecteur d'air 2, deux vont être décrits par la suite.

Selon un premier procédé de fabrication du dispositif déflecteur d'air 2, une première étape consiste à fabriquer l'organe de rigidification 8. Le mode de fabrication peut varier en fonction du matériau choisi pour cette fabrication. L'organe de rigidification 8 peut par exemple être moulé s'il est fabriqué en matière plastique, par exemple en utilisant les matières plastiques illustrées ci-dessus. Les interfaces de connexion 12 peuvent également être moulées.

Une fois l'organe de rigidification 8 fabriqué, ce dernier est placé à l'intérieur d'un moule afin de surmouler le corps principal 4 sur l'organe de rigidification 8.

Lors de ce surmoulage, il est possible d'utiliser un matériau pour former le corps principal 4 n'adhérant pas au matériau formant l'organe de rigidification 8. Par exemple, il est avantageux de réaliser le corps principal 4 en silicone car ce matériau présente l'avantage d'adhérer à très peu d'autres matériaux. On peut également utiliser les couples de matières suivantes :
- un corps principal 4 en polyuréthane thermoplastique et un organe de rigidification 8 en polypropylène chargé en talc ou en fibres de verre,
- un corps principal 4 en polyuréthane thermoplastique et un organe de rigidification 8 en polyamide chargé en fibres de verre,
- un corps principal 4 en silicone et un organe de rigidification 8 en polypropylène chargé en fibres de verre,
- un corps principal 4 en silicone et un organe de rigidification 8 en polyamide chargé en fibres de verre,
- un corps principal 4 réalisé dans un mélange styrène éthylène-butylène styrène et de polypropylène, et un organe de rigidification 8 en polyamide chargé en fibres de verre.

Alternativement ou en complément de l'utilisation d'un matériau n'adhérant pas à l'organe de rigidification 8, il est possible de mouler ce dernier en utilisant un matériau comprenant un adjuvant permettant d'éviter une adhérence, ou encore de réaliser un traitement de surface antiadhérent après fabrication de l'organe de rigidification 8.

L'avantage d'un moulage de l'organe de rigidification 8 est de permettre un moulage de l'ensemble des éléments formant le dispositif déflecteur d'air 2. Par exemple, il est possible de réaliser au sein d'un même moule l'organe de rigidification 8 et le corps principal 4. Il pourrait s'agir par exemple d'un moule comprenant une même matrice mais deux poinçons pour mouler l'organe de rigidification 8 puis le corps principal 4. D'autres procédés connus de l'homme du métier et permettant un moulage de l'organe de rigidification 8 puis un surmoulage du corps principal 4 peuvent être mis en œuvre.

Alternativement ou en complément de l'utilisation d'un matériau n'adhérant pas à l'organe de rigidification 8, on peut prévoir la fabrication d'un organe de rigidification 8 comprenant une ou des dépressions 9. Ces dernières permettent de s'assurer du passage d'air comprimé entre l'organe de rigidification 8 et les parois internes 10 des canaux 6. En particulier, ce passage permettra de décoller le corps principal 4 de l'organe de rigidification 8 en cas d'adhérence entre eux qui serait survenue de par la nature des matériaux utilisés pour les concevoir. Avantageusement, les dépressions 9 sont dimensionnées en tenant compte de la viscosité du matériau utilisé pour mouler le corps principal 4 et ainsi empêcher que cette dernière ne pénètre dans les dépressions 9 pendant le surmoulage en y piégeant de l'air.

Avantageusement, le surmoulage du corps principal 4 est suivi d'une première mise en pression avant utilisation du dispositif déflecteur d'air 2. Il s'agit d'une première injection d'air comprimé permettant de s'assurer du passage optimal d'air comprimé dans les canaux 6, voire d'effectuer la séparation initiale de l'organe de rigidification 8 et du corps principal 4 expliquée ci-dessus.

Selon un second procédé de fabrication du dispositif déflecteur d'air 2, la première étape consiste toujours en la fabrication de l'organe de rigidification décrite plus haut.

En parallèle de cette fabrication, une première partie 18 du corps principal 4 est moulée. Cette première partie comprend le réseau de canaux 6 débouchant, c'est-à-dire accessibles (ou ouverts) afin de pouvoir y placer le ou les organes de rigidification 8. Ce dernier est dès lors placé dans les canaux 6 afin d'obtenir la structure intermédiaire 22 visible sur la figure 12.

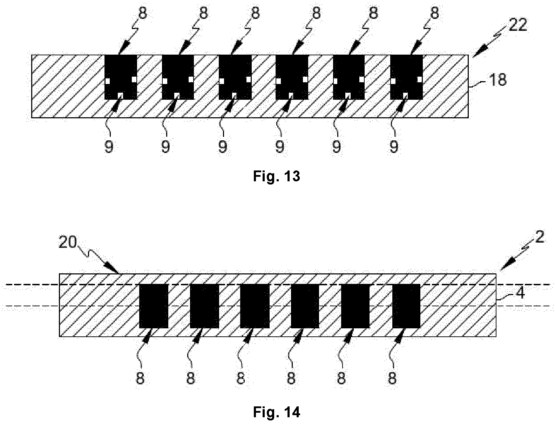

La figure 13 illustre une variante de la figure 12 dans laquelle un organe de rigidification 8 comprenant les dépressions 9 est placé dans la première partie 18 du corps principal 4. De manière générale, ce procédé de fabrication permet de mettre en œuvre les trois modes de réalisation illustrés aux figures 3 à 8. Par exemple, il serait possible de concevoir des canaux 6 ayant une section transversale de taille supérieure à celle des différentes parties de l'organe de rigidification 8 afin qu'un jeu soit ménagé de manière constante entre ce dernier et des parois internes 10 des canaux 6 (troisième mode de réalisation illustré aux figures 7 et 8).

Après placement du ou des organes de rigidification 8 dans les canaux 6, une seconde partie 20 du corps principal 4 peut être moulée sur la structure intermédiaire 22 afin de refermer les canaux 6. La seconde partie 20 du corps principal 4 peut également être rapportée sur la première partie 18 du corps principal 4. La figure 14 comprend deux lignes pointillées illustrant deux séparations différentes entre la première partie 18 du corps principal 4 et la seconde partie 20 du corps principal 4.

### Liste de références

- 2 :: élément de carrosserie à déformation pilotée / dispositif déflecteur d'air
- 3 :: bouclier avant
- 4 :: corps principal
- 5 :: sens du flux d'air
- 6 :: canaux
- 8 :: organe de rigidification
- 9 :: dépressions
- 10 :: parois internes des canaux
- 12 :: interface de fixation
- 14 :: parties principales de l'organe de rigidification
- 16 :: parties secondaires de l'organe de rigidification
- 18 :: première partie du corps principal
- 20 :: seconde partie du corps principal
- 22 :: structure intermédiaire

## Revendications

1. Élément de carrosserie à déformation pilotée (2) de véhicule automobile comprenant un corps principal (4) déformable élastiquement, le corps principal (4) comprenant un réseau de canaux (6), chaque canal (6) étant configuré pour être mis en pression par un flux d'air comprimé provenant d'un compresseur afin de faire passer l'élément de carrosserie à déformation pilotée (2) d'une position de repos à une position déployée, **caractérisé en ce qu'**au moins un organe de rigidification (8) de l'élément de carrosserie à déformation pilotée (2) s'étend à l'intérieur d'au moins une partie des canaux (6).

2. Élément de carrosserie (2) selon la revendication 1, dans lequel le réseau de canaux (6) est configuré pour permettre une déformation du corps principal (4) dans une première direction et une déformation plus restreinte dans des directions perpendiculaires à la première direction.

3. Élément de carrosserie (2) selon l'une quelconque des revendications précédentes, dans lequel le réseau de canaux (6) est un réseau continu, le corps principal (4) comprenant au moins un orifice d'injection d'air à l'intérieur du réseau de canaux (6).

4. Élément de carrosserie (2) selon l'une quelconque des revendications précédentes, dans lequel le corps principal (4) comprend des canaux principaux et des canaux secondaires reliant les canaux principaux entre eux, l'organe de rigidification (8) s'étendant à l'intérieur d'au moins une partie des canaux principaux et/ou secondaires.

5. Élément de carrosserie (2) selon la revendication 4, dans lequel des parties secondaires (16) de l'organe de rigidification (8) s'étendant dans des canaux secondaires sont configurés pour se déformer lorsque l'élément de carrosserie (2) passe de sa position de repos à sa position déployée.

6. Élément de carrosserie (2) selon l'une quelconque des revendications précédentes, dans lequel l'organe de rigidification (8) est réalisé dans un matériau présentant un module élastique supérieur à celui du corps principal (4), de préférence réalisé dans un matériau choisi parmi l'acier, l'aluminium, le polypropylène chargé de fibres de verre ou de talc, du polyamide chargé de fibres de verre ;

7. Élément de carrosserie (2) selon l'une quelconque des revendications précédentes, dans lequel le corps principal (4) a une épaisseur comprise entre 1 millimètre et 20 millimètres, de préférence inférieure à 10 millimètres, et encore de préférence sensiblement égale à 5 millimètres.

8. Élément de carrosserie (2) selon l'une quelconque des revendications précédentes, dans lequel un jeu est ménagé entre l'organe de rigidification (8) et au moins une paroi interne (10) d'au moins un canal (6) lorsque l'élément de carrosserie (2) est en position de repos.

9. Élément de carrosserie (2) selon la revendication précédente, dans lequel l'organe de rigidification (8) comprend au moins une dépression (9) configurée pour permettre le passage d'air entre l'organe de rigidification (8) et une paroi interne (10) d'au moins un canal (6).

10. Élément de carrosserie (2) selon l'une quelconque des revendications précédentes, dans lequel le corps principal (4) comprend plusieurs réseaux de canaux (6) configurés pour être pilotés de façon indépendante les uns des autres.

11. Élément de carrosserie (2) selon l'une quelconque des revendications précédentes, l'élément de carrosserie (2) étant un dispositif déflecteur d'air (2).

12. Procédé de fabrication d'un élément de carrosserie à déformation pilotée (2) selon l'une quelconque des revendications précédentes, comprenant les étapes suivantes :
- Fabrication de l'organe de rigidification (8),
- Placement de l'organe de rigidification (8) dans un moule, et
- Surmoulage du corps principal (4) autour de l'organe de rigidification.

13. Procédé de fabrication selon la revendication 12, dans lequel l'organe de rigidification (8) est moulé.

14. Procédé de fabrication selon l'une quelconque des revendications 12 ou 13, dans lequel le corps principal (4) est moulé à l'aide d'une matière n'adhérant pas à l'organe de rigidification (8).

15. Procédé de fabrication selon l'une quelconque des revendications 12 à 14, dans lequel le surmoulage du corps principal (4) autour de l'organe de rigidification (8) est suivi d'une première mise en pression avant utilisation de l'élément de carrosserie à déformation pilotée (2).

16. Procédé de fabrication d'un élément de carrosserie à déformation pilotée (2) selon l'une quelconque des revendications 1 à 11, comprenant les étapes suivantes :
- Fabrication de l'organe de rigidification (8),
- Moulage d'une première partie (18) du corps principal (4) comprenant le réseau de canaux (6), les canaux (6) étant débouchant,
- Mise en place de l'organe de rigidification (8) à l'intérieur des canaux (6) de la première partie (18) du corps principal (4) restée dans le moule, et
- Fermeture par moulage des canaux (6) à l'aide d'une seconde partie (20) du corps principal (4).

## Patentansprüche

1. Karosserieelement mit gesteuerter Verformung (2) eines Kraftfahrzeugs, das einen elastisch verformbaren Hauptkörper (4) aufweist, wobei der Hauptkörper (4) ein Netzwerk von Kanälen (6) aufweist, wobei jeder Kanal (6) so konfiguriert ist, dass er durch einen von einem Kompressor kommenden Druckluftstrom unter Druck gesetzt wird, um das Karosserieelement mit gesteuerter Verformung (2) aus einer Ruhestellung in eine ausgefahrene Stellung zu bringen, **dadurch gekennzeichnet, dass** sich mindestens ein Versteifungsorgan (8) des Karosserieelements mit gesteuerter Verformung (2) in das Innere mindestens eines Teils der Kanäle (6) erstreckt.

2. Karosserieelement (2) nach Anspruch 1, wobei das Netzwerk von Kanälen (6) so konfiguriert ist, dass es eine Verformung des Hauptkörpers (4) in einer ersten Richtung und eine eingeschränktere Verformung in Richtungen senkrecht zu der ersten Richtung ermöglicht.

3. Karosserieelement (2) nach einem der vorhergehenden Ansprüche, wobei das Netzwerk von Kanälen (6) ein kontinuierliches Netzwerk ist, wobei der Hauptkörper (4) mindestens eine Öffnung zum Einblasen von Luft in das Netzwerk von Kanälen (6) aufweist.

4. Karosserieelement (2) nach einem der vorhergehenden Ansprüche, wobei der Hauptkörper (4) Hauptkanäle und Nebenkanäle aufweist, die die Hauptkanäle miteinander verbinden, wobei sich das Versteifungselement (8) innerhalb mindestens eines Teils der Haupt- und/oder Nebenkanäle erstreckt.

5. Karosserieelement (2) nach Anspruch 4, wobei sekundäre Teile (16) des Versteifungselements (8), die sich in sekundäre Kanäle erstrecken, so konfiguriert sind, dass sie sich verformen, wenn das Karosserieelement (2) von seiner Ruheposition in seine ausgefahrene Position bewegt wird.

6. Karosserieelement (2) nach einem der vorhergehenden Ansprüche, wobei das Versteifungselement (8) aus einem Material mit einem höheren Elastizitätsmodul als der Hauptkörper (4) hergestellt ist, vorzugsweise aus einem Material, das aus Stahl, Aluminium, glasfaser- oder talkumgefülltem Polypropylen, glasfasergefülltem Polyamid ausgewählt ist;

7. Karosserieelement (2) nach einem der vorhergehenden Ansprüche, wobei der Hauptkörper (4) eine Dicke zwischen 1 Millimeter und 20 Millimeter, vorzugsweise weniger als 10 Millimeter und noch bevorzugter im Wesentlichen 5 Millimeter, aufweist.

8. Karosserieelement (2) nach einem der vorhergehenden Ansprüche, wobei zwischen dem Versteifungselement (8) und mindestens einer Innenwand (10) mindestens eines Kanals (6) ein Spielraum vorhanden ist, wenn sich das Karosserieelement (2) in der Ruhestellung befindet.

9. Karosserieelement (2) nach dem vorhergehenden Anspruch, wobei das Versteifungselement (8) mindestens eine Vertiefung (9) aufweist, die konfiguriert ist, den Durchgang von Luft zwischen dem Versteifungselement (8) und einer Innenwand (10) mindestens eines Kanals (6) zu ermöglichen.

10. Karosserieelement (2) nach einem der vorhergehenden Ansprüche, wobei der Hauptkörper (4) mehrere Netze von Kanälen (6) aufweist, die konfiguriert sind, unabhängig voneinander angesteuert zu werden.

11. Karosserieelement (2) nach einem der vorhergehenden Ansprüche, wobei das Karosserieelement (2) eine Luftleitvorrichtung (2) ist.

12. Verfahren zur Herstellung eines Karosserieelements mit gesteuerter Verformung (2) nach einem der vorhergehenden Ansprüche, aufweisend die folgenden Schritte:
- Herstellen des Versteifungselements (8),
- Platzieren des Versteifungselements (8) in einer Form, und
- Umspritzen des Hauptkörpers (4) um das Versteifungselement herum.

13. Herstellungsverfahren nach Anspruch 12, bei dem das Versteifungsorgan (8) geformt wird.

14. Herstellungsverfahren nach einem der Ansprüche 12 oder 13, wobei der Hauptkörper (4) mit einem Material geformt wird, das nicht an dem Versteifungsorgan (8) haftet.

15. Herstellungsverfahren nach einem der Ansprüche 12 bis 14, wobei auf das Umspritzen des Hauptkörpers (4) um das Versteifungsorgan (8) herum eine erste Druckbeaufschlagung vor der Verwendung des Karosserieteils mit gesteuerter Verformung (2) folgt.

16. Verfahren zur Herstellung eines Karosserieteils mit gesteuerter Verformung (2) nach einem der Ansprüche 1 bis 11, das die folgenden Schritte aufweist:
- Herstellen des Versteifungselements (8),
- Gießen eines ersten Teils (18) des Hauptkörpers (4), der das Netzwerk von Kanälen (6) aufweist, wobei die Kanäle (6) durchgängig sind,
- Anbringen des Versteifungselements (8) innerhalb der Kanäle (6) des ersten Teils (18) des Hauptkörpers (4), der in der Form verblieben ist, und
- Verschließen der Kanäle (6) durch Formen mithilfe eines zweiten Teils (20) des Hauptkörpers (4).

## Claims

1. Controlled-deformation bodywork element (2) for a motor vehicle, comprising an elastically deformable main body (4), the main body (4) comprising a network of channels (6), each channel (6) being configured to be pressurized by a flow of compressed air from a compressor so as to move the controlled-deformation bodywork element (2) from a rest position to a deployed position, **characterized in that** at least one stiffening member (8) of the controlled-deformation bodywork element (2) extends inside at least a portion of the channels (6).

2. Bodywork element (2) according to claim 1, wherein the network of channels (6) is configured to allow deformation of the main body (4) in a first direction and a more limited deformation in directions perpendicular to the first direction.

3. Bodywork element (2) according to any one of the preceding claims, wherein the network of channels (6) is a continuous network, the main body (4) comprising at least one air injection orifice into the network of channels (6).

4. Bodywork element (2) according to any one of the preceding claims, wherein the main body (4) comprises main channels and secondary channels interconnecting the main channels, the stiffening member (8) extending inside at least a portion of the main and/or secondary channels.

5. Bodywork element (2) according to claim 4, wherein secondary portions (16) of the stiffening member (8) extending into secondary channels are configured to deform when the bodywork element (2) moves from its rest position to its deployed position.

6. Bodywork element (2) according to any one of the preceding claims, wherein the stiffening member (8) is made of a material having an elastic modulus greater than that of the main body (4), preferably of a material selected from steel, aluminum, glass-fiber- or talc-filled polypropylene, or glass-fiber-filled polyamide.

7. Bodywork element (2) according to any one of the preceding claims, wherein the main body (4) has a thickness between 1 millimeter and 20 millimeters, preferably less than 10 millimeters, and more preferably substantially equal to 5 millimeters.

8. Bodywork element (2) according to any one of the preceding claims, wherein a clearance is provided between the stiffening member (8) and at least one internal wall (10) of at least one channel (6) when the bodywork element (2) is in the rest position.

9. Bodywork element (2) according to the preceding claim, wherein the stiffening member (8) comprises at least one recess (9) configured to allow air to pass between the stiffening member (8) and an internal wall (10) of at least one channel (6).

10. Bodywork element (2) according to any one of the preceding claims, wherein the main body (4) comprises several channel networks (6) configured to be controlled independently of one another.

11. Bodywork element (2) according to any one of the preceding claims, wherein the bodywork element (2) is an air deflector device (2).

12. Method of manufacturing a controlled-deformation bodywork element (2) according to any one of the preceding claims, comprising the steps of:
- manufacturing the stiffening member (8),
- placing the stiffening member (8) in a mold, and
- overmolding the main body (4) around the stiffening member.

13. Manufacturing method according to claim 12, wherein the stiffening member (8) is molded.

14. Manufacturing method according to claim 12 or 13, wherein the main body (4) is molded from a material that does not adhere to the stiffening member (8).

15. Manufacturing method according to any one of claims 12 to 14, wherein the overmolding of the main body (4) around the stiffening member (8) is followed by an initial pressurization before use of the controlled-deformation bodywork element (2).

16. Method of manufacturing a controlled-deformation bodywork element (2) according to any one of claims 1 to 11, comprising the steps of:
- manufacturing the stiffening member (8),
- molding a first portion (18) of the main body (4) comprising the network of channels (6), the channels (6) being open-ended,
- placing the stiffening member (8) inside the channels (6) of the first portion (18) of the main body (4) while it remains in the mold, and
- closing the channels (6) by molding a second portion (20) of the main body (4).
